# FASCICULE DE BREVET EUROPEEN

(11) **EP 3 832 172 B1**
(45) Date de publication et mention de la délivrance du brevet: **04.01.2023**
(21) Numéro de dépôt: 20209429.8
(22) Date de dépôt: 24.11.2020
(51) Int. Cl.: F16H 63/30, F16D 23/06

(54) **DISPOSITIF DE TRANSMISSION DE COUPLE COMPACT POUR UN VÉHICULE AUTOMOBILE**
KOMPAKTE DREHMOMENTÜBERTRAGUNGSVORRICHTUNG FÜR EIN KRAFTFAHRZEUG
COMPACT TORQUE TRANSMISSION DEVICE FOR A MOTOR VEHICLE

(30) Priorité: 06.12.2019 FR 1913901
(43) Date de publication de la demande: 09.06.2021
(73) Titulaire: VALEO EMBRAYAGES, 80009 Amiens (FR)
(72) Inventeur: MAUREL, Hervé, 95892 CERGY PONTOISE (FR)
(74) Mandataire: Valeo Powertrain Systems

(56) Documents cités:
- DE-A1-102016 218 078
- DE-A1-102018 111 176
- US-A- 5 377 800

## Description

### DOMAINE TECHNIQUE DE L'INVENTION

L'invention se rapporte à un dispositif de transmission de couple pour un véhicule électrique ou hybride, notamment pour un véhicule automobile électrique ou hybride.

### ETAT DE LA TECHNIQUE ANTERIEURE

L'invention s'applique plus particulièrement aux véhicules hybrides et aux véhicules électriques. Les vitesses d'un moteur électrique peuvent être élevées, supérieures ou égales à 15000 tours par minutes par exemple, notamment pour des chaînes de transmission électriques à deux rapports.

Pour adapter la vitesse et le couple, l'utilisation de moteurs électriques nécessite généralement une transmission comportant un dispositif de réduction de vitesse permettant d'atteindre les niveaux de vitesse et de couple de sortie souhaités à chaque roue, et un différentiel pour faire varier la vitesse entre deux roues latéralement opposées.

Pour s'adapter aux différents régimes du véhicule, il est connu d'utiliser des embrayages qui permettent de sélectionner le rapport de réduction souhaité au niveau du dispositif de réduction de vitesse. Ce type de dispositif est par exemple divulgué dans le document DE102016202723.

Ce dispositif n'est pas satisfaisant du point de vue du rendement car un couple de traînées intervient sur l'un des embrayages qui est ouvert lorsque l'autre des embrayages est fermé. Ce couple de trainée est particulièrement préjudiciable lorsque les embrayages sont humides.

En outre, les embrayages de ce dispositif transmettent un couple relativement important, ce qui implique un dimensionnement et une masse des embrayages importants, et donc un encombrement important lié aux embrayages.

Il a été proposé dans le brevet US5377800 un système de changement de vitesse à commande hydraulique.

Il a été proposé dans la demande FR1901916, non publiée à ce jour, un dispositif de transmission de couple pour un véhicule comprenant au moins un moteur, le dispositif de transmission de couple comprenant :
- un premier embrayage comprenant un premier élément d'entrée apte à être entraînée par le moteur et un premier élément de sortie, un couple étant transmis entre le premier élément d'entrée et le premier élément de sortie lorsque le premier embrayage est fermé,
- un deuxième embrayage comprenant un deuxième élément d'entrée apte à être entraînée par le moteur et un deuxième élément de sortie, un couple étant transmis entre le deuxième élément d'entrée et le deuxième élément de sortie lorsque le deuxième embrayage est fermé,
- un organe de transmission,
- un premier mécanisme de transmission agencé pour transmettre un couple entre le premier élément de sortie et l'organe de transmission, selon un premier rapport de vitesses,
- un deuxième mécanisme de transmission agencé pour transmettre un couple entre le deuxième élément de sortie et l'organe de transmission, selon un deuxième rapport de vitesses différent du premier rapport de vitesse, et
- un élément de connexion agencé pour autoriser ou interrompre l'entraînement mutuel en rotation entre le premier élément de sortie du premier embrayage et l'organe de transmission, par l'intermédiaire du premier mécanisme de transmission.

L'utilisation d'au moins deux rapports de vitesses permet de concilier couple de démarrage élevé et vitesse maximale et par conséquent de réduire le temps nécessaire au véhicule pour atteindre une vitesse élevée. Le choix de deux rapports de vitesse avec un moteur électrique offre un bon compromis entre complexité de la transmission, performances dynamiques, consommation du véhicule, et taille du moteur électrique.

L'utilisation des embrayages, notamment des embrayages multidisques progressifs, permet également de garantir le confort de l'utilisateur en évitant les changements de rapports brusques ainsi que les variations perceptibles d'accélération.

De plus, l'élément de connexion permet d'interrompre l'entraînement de l'élément de sortie du premier embrayage, et notamment les disques de friction de sortie du premier embrayage, lorsque le deuxième embrayage est fermé, ce qui permet d'améliorer le rendement énergétique en limitant significativement, voire en supprimant le couple de traînées au niveau du premier embrayage lorsque le deuxième embrayage est fermé.

Un tel élément de connexion intègre un actionneur dont l'organe mobile est généralement fixe en rotation, et une liaison cinématique rotative entre cet organe mobile et une pièce tournante qui vient réaliser ou interrompre l'entraînement mutuel en rotation du premier élément de sortie du premier embrayage et de l'organe de transmission.

L'organe mobile peut par exemple être une fourchette d'embrayage et la liaison cinématique rotative une butée tournante à roulement. Mais une telle disposition est encombrante et relativement complexe.

### EXPOSE DE L'INVENTION

L'invention vise à simplifier et rendre plus compact l'élément de connexion.

Pour ce faire est proposé, selon un premier aspect de l'invention, dispositif de transmission de couple comportant :
- un arbre de transmission apte à tourner autour d'un axe de révolution,
- une roue de transmission folle apte à tourner par rapport à l'arbre de transmission autour de l'axe de révolution, la roue de transmission folle comportant un voile de roue et un tambour faisant saillie axialement depuis une périphérie du voile de roue ;

- une première interface de crabotage et une deuxième interface de crabotage, la première interface de crabotage étant solidaire de l'arbre de transmission, la deuxième interface de crabotage étant solidaire de la roue de transmission folle ;
- un baladeur comportant une interface de crabotage intermédiaire engagée avec l'une des première et deuxième interfaces de crabotage, le baladeur étant apte à passer par translation parallèle à l'axe de révolution d'une position de retrait dans laquelle l'interface de crabotage intermédiaire n'est pas engagée avec l'autre des première et deuxième interfaces de crabotage à une position d'accouplement dans laquelle l'interface de crabotage intermédiaire est engagée avec l'autre des première et deuxième interfaces de crabotage et réalise un accouplement en rotation entre la première interface de crabotage et la deuxième interface de crabotage ;
- au moins un organe de rappel élastique apte à se charger lorsque le baladeur passe de la position de retrait à la position d'accouplement et apte, en se déchargeant, à ramener le baladeur de la position d'accouplement à la position de retrait, l'organe de rappel élastique étant positionné dans un logement de la roue de transmission folle délimité par le voile de roue et par le tambour.

En pratique, la première interface de crabotage et la deuxième interface de crabotage sont constituées par des cannelures annulaires de pas identiques, dans lesquelles viennent coulisser axialement des dents de l'interface de crabotage intermédiaire. Mais l'homme du métier comprendra que d'une manière plus générale, une seule dent ou cannelure suffit sur l'interface de cabotage intermédiaire, qui peut coulisser dans une seule cannelure ou sur une seule dent de la première interface de crabotage et de la deuxième interface de crabotage.

L'organe élastique confère au crabot réalisé par les trois interfaces de crabotage une fonction d'accouplement « normalement ouvert ».

Le dispositif de transmission de couple présente ainsi une grande compacité axiale. De préférence, la deuxième interface de crabotage est positionnée dans le logement de la roue de transmission folle, la première interface de crabotage étant de préférence logée au moins partiellement dans le logement de la roue de transmission folle.

En pratique, le baladeur est au moins partiellement logé dans le logement de la roue de transmission folle.

Suivant un mode de réalisation, l'organe de rappel élastique est fixe en rotation autour de l'axe de révolution. De préférence, le dispositif de transmission de couple comporte en outre un support fixe, une extrémité de l'organe de rappel élastique prenant appui contre un appui solidaire du support fixe. Ainsi, l'organe de rappel élastique ne fait pas partie de l'équipage tournant qui doit être accéléré à chaque accouplement, ce qui limite le couple transitoire du système d'accouplement lors des phases d'accouplement.

L'organe de rappel élastique peut être constitué par un ou plusieurs ressorts, notamment par des ressorts hélicoïdaux dont les axes sont parallèles à l'axe de révolution et distants de l'axe de révolution, équirépartis autour de l'axe de révolution.

Suivant un mode de réalisation particulièrement compact, un palier de guidage est monté, par exemple fretté, sur l'arbre de transmission et dans un logement du support fixe.

Suivant un mode de réalisation, le dispositif de transmission de couple comporte en outre :
- un actionneur comportant un organe mobile, l'organe mobile étant mobile en translation par rapport au support fixe parallèlement à l'axe de révolution entre une position de repos et une position activée ; et
- une liaison cinématique rotative entre l'organe mobile et le baladeur, présentant un degré de liberté de rotation autour de l'axe de révolution, l'organe mobile étant apte, par l'intermédiaire de la liaison cinématique, à entraîner le baladeur de la position de retrait à la position d'accouplement et à charger l'organe de rappel élastique en passant de la position de repos à la position activée, l'organe de rappel élastique étant apte, en se déchargeant, par l'intermédiaire de la liaison cinématique, à ramener l'organe mobile de la position activée à la position de repos et le baladeur de la position d'accouplement à la position de retrait.

L'actionneur peut être le cas échéant électromécanique. Alternativement, et de façon préférentielle, l'organe mobile comprend un piston annulaire apte à coulisser axialement dans une chambre annulaire à volume variable du support fixe, reliée à un branchement d'alimentation hydraulique. L'entraînement hydraulique assure une grande compacité à un coût très faible. Le vérin hydraulique réalisé par le piston coulissant dans la chambre annulaire est monodirectionnel, le retour à la position de repos étant assuré par l'organe de rappel élastique.

De préférence, l'organe mobile dans la position activée est au moins partiellement engagé dans le logement de la roue de transmission folle.

Suivant un mode de réalisation, la liaison cinématique rotative comporte un poussoir intermédiaire entre l'organe mobile et l'organe de rappel élastique, le poussoir étant fixe en rotation autour de l'axe de révolution, en appui contre l'organe mobile et contre l'organe de rappel élastique, et lié au baladeur par un guidage en rotation autour de l'axe de révolution, le guidage en rotation étant de préférence logé dans le logement de la roue de transmission folle.

De préférence, le guidage en rotation comporte au moins un patin annulaire, le patin annulaire étant positionné au moins partiellement entre deux parois opposées du baladeur et au moins partiellement entre deux parois opposées du poussoir.

Suivant un mode de réalisation, les deux parois opposées du baladeur peuvent être formées sur une nervure radiale annulaire du baladeur, qui pénètre dans une gorge annulaire du patin.

Alternativement, et de manière préférentielle, les parois opposées du baladeur peuvent être constituées par des flancs opposés d'une gorge annulaire formée dans le baladeur, et dans laquelle est au moins partiellement engagé le patin. De préférence, le patin annulaire est positionné au moins partiellement entre deux parois opposées du poussoir, de préférence annulaires.

Suivant un mode de réalisation, les deux parois opposées du poussoir sont formées sur une nervure radiale annulaire du poussoir, qui pénètre dans une gorge annulaire du patin.

Alternativement, et suivant un mode de réalisation préféré, les parois opposées du poussoir peuvent être constituées par des flancs opposés d'une gorge annulaire formée dans le poussoir, et dans laquelle est au moins partiellement engagé le patin.

Préférentiellement, le patin est logé dans le logement de la roue de transmission folle.

La structure de la liaison cinématique rotative permet d'assurer très simplement la fonction de transmission des mouvements de translation sans transmission des mouvements de rotation autour de l'axe de révolution. Son positionnement contribue à la compacité du dispositif de transmission de couple.

Suivant un mode de réalisation, le dispositif de transmission de couple comporte, interposé axialement entre la première interface de crabotage et la deuxième interface de crabotage, un synchroniseur comportant au moins une bague de synchronisation, le baladeur dans la position de retrait n'entraînant pas la bague de synchronisation, le baladeur étant apte, en passant lors d'une translation axiale de la position de retrait à la position d'accouplement, à passer par une position intermédiaire de synchronisation dans laquelle l'interface de crabotage intermédiaire est engagée dans une interface de crabotage de synchronisation de la bague de synchronisation et réalise un accouplement en rotation entre la première interface de crabotage et la bague de synchronisation, la bague de synchronisation étant apte à tourner par rapport à la deuxième interface de crabotage autour de l'axe de révolution en engendrant par friction un couple d'entraînement de la deuxième interface de crabotage. Le synchroniseur permet une mise en mouvement progressive de la deuxième interface de crabotage dans la phase transitoire d'accouplement, ce qui évite des pics de couple et des chocs trop importants entre l'interface de crabotage intermédiaire et l'autre des premières et deuxième interfaces de crabotage.

En pratique, le synchroniseur est logé dans le logement de la roue de transmission folle.

De même, le baladeur est au moins partiellement logé dans le logement de la roue de transmission folle.

### BREVE DESCRIPTION DES FIGURES

D'autres caractéristiques et avantages de l'invention ressortiront à la lecture de la description qui suit, en référence aux figures annexées, qui illustrent :
[Fig. 1] la figure 1, une vue en coupe, suivant les traces de plans de coupe I-I de la figure 4 d'un système de transmission de couple intégrant un système d'accouplement selon un exemple de réalisation de l'invention, dans une position de retrait du système d'accouplement ;
[Fig. 2] la figure 2, une autre vue en coupe, suivant les traces de plans de coupe II de la figure 4 du système de transmission de couple de la figure 1, dans la position de retrait du système d'accouplement ;
[Fig. 3] la figure 3, un détail de la figure 2 ;
[Fig. 4] la figure 4, une vue de face du système de transmission de couple de la figure 1 ;

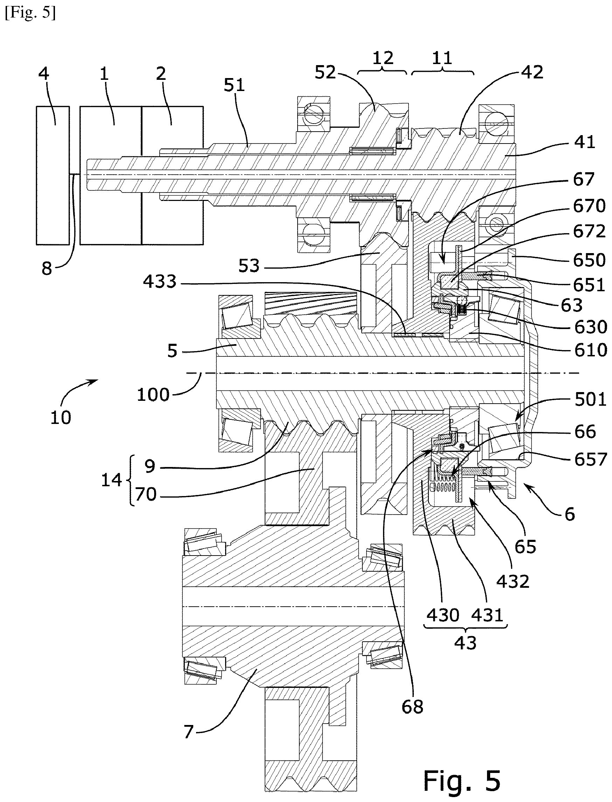

[Fig. 5] la figure 5, une vue en coupe du système de transmission de couple de la figure 1, dans une position d'accouplement du système d'accouplement;
[Fig. 6] la figure 6, une autre vue en coupe du système de transmission de couple de la figure 1, dans la position d'accouplement du système d'accouplement;
[Fig. 7] la figure 7, un détail de la figure 6.

Pour plus de clarté, les éléments identiques ou similaires sont repérés par des signes de référence identiques sur l'ensemble des figures.

### DESCRIPTION DÉTAILLÉE DE MODES DE REALISATION

Dans la description et les revendications, on utilisera les termes "externe" et "interne" ainsi que les orientations "axiale" et "radiale" pour désigner, selon les définitions données dans la description, des éléments du dispositif de transmission. Par convention, l'orientation "radiale" est dirigée orthogonalement à l'orientation axiale. L'orientation axiale se rapporte, suivant le contexte, à l'axe de rotation de l'un des arbres, par exemple l'arbre de sortie du moteur ou l'arbre de transmission 5. L'orientation "circonférentielle" est dirigée orthogonalement à la direction axiale et orthogonalement à la direction radiale. Les termes "externe" et "interne" sont utilisés pour définir la position relative d'un élément par rapport à un autre, par rapport à l'axe de référence, un élément proche de l'axe est ainsi qualifié d'interne par opposition à un élément externe situé radialement en périphérie.

Les différents organes du dispositif de transmission disposent chacun d'une entrée de couple appelé aussi élément d'entrée ainsi que d'une sortie de couple appelée aussi élément de sortie. L'entrée est située, d'un point de vue cinématique, du côté du moteur et la sortie est située du côté des roues du véhicule.

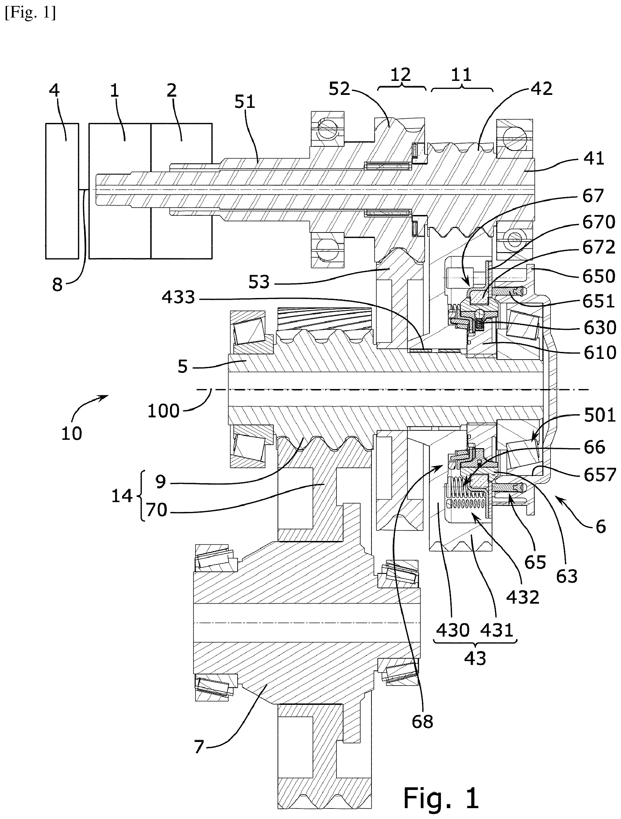

Sur la figure **1** est illustré un système de transmission de couple comprenant un moteur électrique **4** de véhicule automobile apte à faire avancer le véhicule, et un ensemble de transmission de couple.

L'ensemble de transmission de couple comporte un dispositif de transmission **10** et un différentiel **7** apte à entraîner deux roues latéralement opposées, ou deux trains de roues avant et arrière motorisés du véhicule. Le dispositif de transmission de couple **10** comprend un organe de sortie **9** couplé au différentiel **7**.

De façon précédemment décrite dans la demande antérieure FR1901916, le dispositif de transmission de couple **10** comporte :
- un premier embrayage **1** comprenant un premier élément d'entrée apte à être entraînée par le moteur **4** et un premier élément de sortie, un couple étant transmis entre le premier élément d'entrée et le premier élément de sortie lorsque le premier embrayage est fermé,
- un deuxième embrayage **2** comprenant un deuxième élément d'entrée apte à être entraînée par le moteur et un deuxième élément de sortie, un couple étant transmis entre le deuxième élément d'entrée et le deuxième élément de sortie lorsque le deuxième embrayage est fermé,
- un organe de transmission **5**, qui est ici un arbre de transmission,
- un premier mécanisme de transmission **11** agencé pour transmettre un couple entre le premier élément de sortie et l'organe de transmission **5**, selon un premier rapport de vitesses,
- un deuxième mécanisme de transmission **12** agencé pour transmettre un couple entre le deuxième élément de sortie et l'organe de transmission **5** selon un deuxième rapport de vitesses différent du premier rapport de vitesse,
- un système d'accouplement **6** agencé pour autoriser ou interrompre l'entraînement mutuel en rotation entre le premier élément de sortie du premier embrayage **1** et l'organe de transmission **5**, par l'intermédiaire du premier mécanisme de transmission **11**.

On entend par rapport de vitesse, le ratio entre la vitesse à la sortie du mécanisme de transmission et la vitesse à l'entrée du mécanisme de transmission.

Le premier élément d'entrée du premier embrayage **1** et le deuxième élément d'entrée du deuxième embrayage **2** sont agencés pour être entraînés par un arbre d'entrée de couple commun **8** qui est ici l'arbre de sortie du moteur **4**. Les embrayages **1** et **2** sont placés cinématiquement au plus près du moteur **4**, en amont des dispositifs de réduction, ce qui signifie que les deux embrayages sont placés dans une portion la chaîne de transmission où le couple est le plus faible. Dans le cas d'embrayages progressifs par friction notamment, cette disposition permet une meilleure compacité des embrayages. De préférence, le premier embrayage **1** est un embrayage progressif par friction et le deuxième embrayage **2** est un embrayage progressif par friction. Ainsi les changements de vitesses peuvent être lisses et progressifs sans accélérations brusques. On entend par embrayage progressif, un embrayage dont le couple transmissible est contrôlable de façon progressive. Le cas échéant, le premier embrayage **1** et le deuxième embrayage **2** peuvent former conjointement un double embrayage.

Pour augmenter le couple et baisser la vitesse de rotation à la sortie du dispositif de transmission de couple, un réducteur de vitesse **14** est ici formé par l'organe de sortie **9** et le différentiel **7** au moyen d'un pignon formant l'organe de sortie **9** engrenant avec une roue dentée **70** agencée à l'entrée du différentiel **7**.

Le système d'accouplement **6** est agencé pour autoriser l'entraînement mutuel en rotation entre le premier élément de sortie du premier embrayage **1** et l'arbre de transmission **5**, par l'intermédiaire du premier mécanisme de transmission **11**, lorsque le premier embrayage **1** est fermé, et pour interrompre l'entraînement mutuel en rotation entre le premier élément de sortie du premier embrayage **1** et l'arbre de transmission **5**, par l'intermédiaire du premier mécanisme de transmission **11**, lorsque le premier embrayage est ouvert et le deuxième embrayage fermé.

Le système d'accouplement est agencé de façon à autoriser ou interrompre l'entraînement mutuel directement entre l'arbre de transmission **5** et le premier mécanisme de transmission **11**. En évitant d'entraîner le premier mécanisme de transmission de façon inutile, on évite d'avoir des pertes de rendements préjudiciables au niveau du premier mécanisme de transmission, pertes qui pourraient être liées en particulier au barbotage des éléments de transmission tournants.

Le premier mécanisme de transmission **11** est un train d'engrenages réducteur de vitesse. Le deuxième mécanisme de transmission **12** est également un train d'engrenages réducteur de vitesse. Ces trains d'engrenage peuvent être montés de façon à barboter dans l'huile. Le premier mécanisme de transmission **11** a un rapport de vitesse plus faible que le deuxième mécanisme de transmission **12**. Le premier mécanisme de transmission est utilisé pour propulser le véhicule à des vitesses relativement basses, et le deuxième mécanisme de transmission est utilisé pour propulser le véhicule à des vitesses relativement élevées.

Le premier mécanisme de transmission **11** comprend un premier arbre d'entrée **41** solidaire en rotation d'une première roue dentée d'entrée **42** ou pignon **42**, une roue dentée de sortie **43** engrenant ici directement avec la première roue dentée d'entrée **42**.

Le deuxième mécanisme de transmission **12** comprend un deuxième arbre d'entrée **51** solidaire en rotation d'une deuxième roue dentée d'entrée **52** ou pignon **52**, une deuxième roue dentée de sortie **53** engrenant ici directement avec la deuxième roue dentée d'entrée **52**.

Le deuxième arbre d'entrée est un arbre creux **51** et le premier arbre d'entrée **41** s'étend à l'intérieur de cet arbre creux **51**. Le deuxième arbre d'entrée **51** et le premier arbre d'entrée **41** sont coaxiaux.

Le pignon **42** peut être monté ou formé d'une seule pièce avec le premier arbre d'entrée **41**. De même, le pignon **52** peut être monté ou formé d'une seule pièce avec le deuxième arbre d'entrée **51**.

La deuxième roue dentée de sortie **53** est solidaire en rotation de l'arbre de transmission **5**, par exemple via des cannelures. La première roue dentée de sortie **43** est une roue folle qui tourne autour de l'axe de révolution **100** de l'arbre de transmission **5**, mais peut être rendue solidaire en rotation de l'arbre de transmission **5** par l'intermédiaire du système d'accouplement **6**. Un roulement à aiguilles **430** assure le guidage en rotation de la première roue dentée de sortie **43** sur une portée cylindrique de l'arbre de transmission **5**.

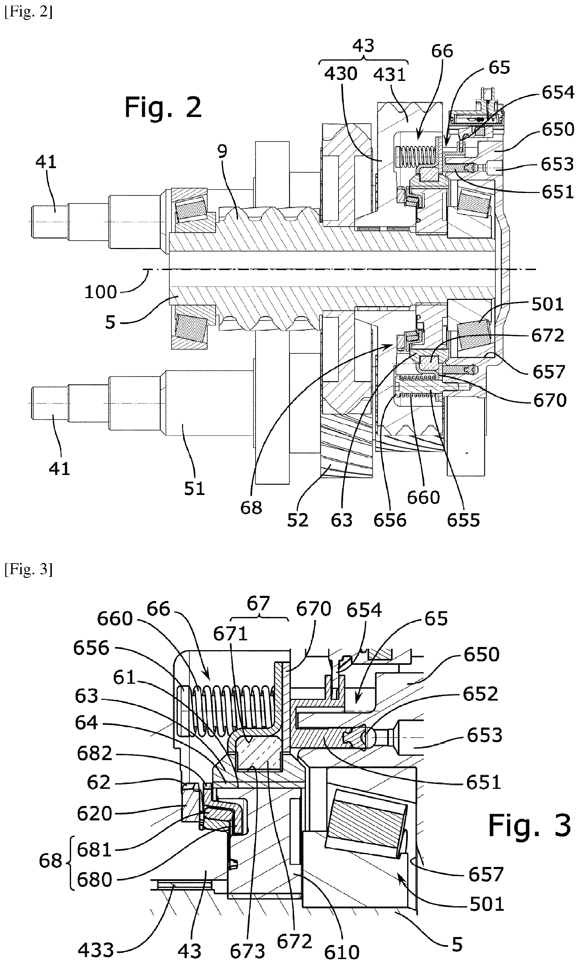

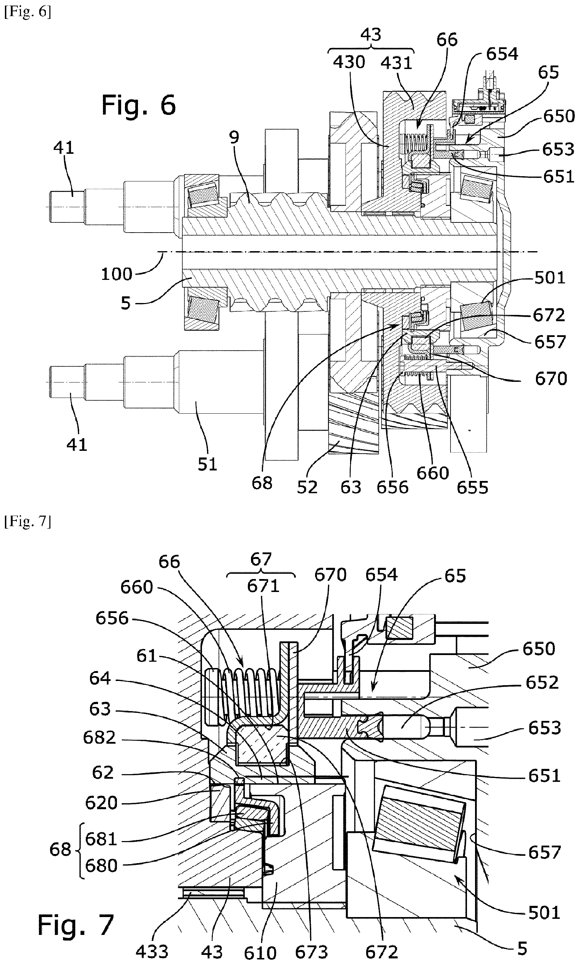

Le système d'accouplement **6**, illustré en détail sur les figures **3** et **7**, comporte une première interface de crabotage **61** constituée ici par une première cannelure formée à la périphérie d'une roue **610** frettée ou solidarisée par des cannelures sur l'arbre de transmission **5**, une deuxième interface de crabotage **62** constituée par une deuxième cannelure formée à la périphérie d'une bague **620** frettée sur la première roue dentée de sortie **43** et un baladeur **63** comportant une interface de crabotage intermédiaire **64** formé par une cannelure intermédiaire agencée pour coopérer avec la première cannelure **61** et la deuxième cannelure **62**.

De façon plus spécifique, les cannelures **61**, **62**, **64** sont composées de gorges séparées par des nervures ou dents, qui s'étendent axialement parallèle à l'axe de révolution **100**. Les dents de la cannelure intermédiaire **64** sont ici tournées radialement vers l'intérieur pour pénétrer dans les gorges correspondantes de la première cannelure **61** et de la deuxième cannelure **62**. La cannelure intermédiaire **64** est engagée de façon permanente avec la première cannelure **61**. Le baladeur **63** qui porte la cannelure intermédiaire **64** est apte à passer, par translation parallèlement à l'axe de révolution **100**, d'une position de retrait illustrée sur les figures **1** à **3**, dans laquelle la cannelure intermédiaire **64** n'est pas engagée avec la deuxième cannelure **62**, à une position d'accouplement dans laquelle la cannelure intermédiaire est engagée avec la deuxième cannelure et réalise un accouplement en rotation entre la première cannelure et la deuxième cannelure, et par ce truchement entre la première roue dentée de sortie **43** et l'arbre de transmission **5**.

De façon optionnelle, un organe de maintien élastique **630** est disposé entre la roue **610** et le baladeur **63** pour maintenir le baladeur **63** dans la position de retrait tant qu'un effort axial supérieur à un seuil prédéterminé n'est pas exercé sur le baladeur **63** par le piston **651**.

Le système d'accouplement **6** comporte en outre un actionneur **65** comportant un support fixe **650** et un organe mobile **651** constitué par un piston annulaire apte à coulisser axialement dans une chambre annulaire **652** à volume variable du support fixe **650**, cette chambre annulaire **652** étant reliée à un branchement d'alimentation hydraulique **653**. Optionnellement, un capteur **654** permet de détecter la position de l'organe mobile **651**.

Le vérin hydraulique constitué par le piston annulaire **651** coulissant dans la chambre annulaire **652** est monodirectionnel et permet d'entraîner le baladeur **63** de la position de retrait à la position d'accouplement.

Un organe de rappel élastique **66**, constitué ici par des ressorts hélicoïdaux **660** alignés sur des axes parallèles à l'axe de révolution **100** et répartis autour de l'axe de révolution **100**, assure quant à lui le retour du baladeur de la position d'accouplement à la position de retrait. L'organe de rappel élastique **66** est positionné en opposition au piston **651**, de manière à se charger lorsque la pression dans la chambre annulaire **652** contraint le piston **651** à pousser le baladeur **63** de la position de retrait à la position d'accouplement, et à se décharger en repoussant le piston **651** jusqu'à la position de retrait, dès relâchement de la pression dans la chambre **652**.

Une liaison cinématique **67** est interposée entre le baladeur **63** d'une part, et l'actionneur **65** et son organe de rappel élastique **66** d'autre part. La liaison cinématique comporte un poussoir **670** formant une gorge de commande **671**, entre deux parois opposées de laquelle est pincée une portion radialement extérieure d'un patin annulaire **672**, dont une portion radialement intérieure est logée avec un jeu axial entre deux parois opposées d'une gorge **673** du baladeur **63**.

Des tiges **655** (figure **2**) solidement vissées dans le corps du support fixe **650**, traversent des lumières formées dans le poussoir **670** dans l'axe des ressorts **660** de l'organe de rappel élastique **66**, traversent également les ressorts **660** et comportent chacune une tête **656** servant de butée pour une extrémité du ressort **660** associé. Les ressorts **660** se trouvent ainsi pincés entre les têtes **656** des tiges **655** et le poussoir **670**.

Le poussoir **670**, pincé entre le piston **651** et l'organe de rappel élastique **66**, est guidé en translation par les tiges **655** de manière à ne pas tourner autour de l'axe de révolution **100**. Ainsi, l'équipage mobile constitué par le poussoir **670**, l'organe de rappel élastique **66** et le piston **651** est mobile en translation axiale, sans rotation autour de l'axe de révolution **100**. Le poussoir **670** peut être d'une pièce ou, comme visible sur la figure **3**, constitué de deux tôles adjacentes plaquées l'une contre l'autre et délimitant la gorge **671**.

Le patin **672**, pincé dans la gorge **671** du poussoir **670** et positionné dans la gorge **673** du baladeur **63**, assure un guidage en rotation entre le poussoir **670** et le baladeur **63**, qui permet de transmettre au baladeur **63** les mouvements de translation du poussoir **670** mais sans empêcher une libre rotation du baladeur **63** autour de l'axe de révolution **100** par rapport au poussoir **670**. Les mouvements de translation sont assurés lorsque le poussoir **670**, se déplaçant axialement sous l'impulsion du piston **651** ou de l'organe de rappel élastique **66**, entraîne le patin **672** en appui contre l'une des parois latérales opposées de la gorge **673** et contraint le patin **672** à pousser axialement le baladeur **63** dans la même direction que le poussoir **670**. Le patin **672** est constitué en matière à faible coefficient de frottement, idéalement imprégné de lubrifiant solide, pour un frottement minimal avec les parois latérales de la gorge **673**.

Le jeu axial agencé entre le patin **672** et les parois opposées de la gorge annulaire **673** doit être faible par rapport à la course totale du poussoir entre la position de retrait et la position d'accouplement. En pratique, ce jeu a une amplitude inférieure au dixième de la course entre la position de repos et la position activée. Ce jeu permet, une fois que le poussoir **672** a atteint la position d'accouplement, de quasiment éliminer toute pression, voire tout contact, entre le patin **672** et les parois de la gorge **673**, dans la mesure où l'accouplement entre les cannelures **61**, **62** et **64** n'engendre, une fois réalisé, aucun effort axial significatif. Ainsi le patin **672** n'oppose-t-il aucun couple de traînée notable à la rotation de la première roue dentée de sortie **43**.

Le système d'accouplement **6** comporte en outre, interposé axialement entre la première interface de crabotage **61** et la deuxième interface de crabotage **62**, un synchroniseur **68** comportant au moins une bague de synchronisation **680** libre en rotation autour de l'axe de révolution **100** et, le cas échéant, une ou plusieurs bagues intermédiaires de friction **681** entre la bague de synchronisation **680** et la première roue dentée de sortie **43**. La bague de synchronisation **680** présente au moins une dent ou gorge axiale **682** constituant une interface de crabotage de synchronisation.

Le baladeur **63** dans la position de retrait n'a aucune interaction avec la bague de synchronisation **680**. Lorsque le baladeur débute son mouvement de translation axiale de la position de retrait vers la position d'accouplement, il passe par une position intermédiaire de synchronisation dans laquelle la cannelure intermédiaire **64** et l'interface de crabotage de synchronisation **681** de la bague de synchronisation **680** s'engagent l'une dans l'autre et réalisent un accouplement en rotation entre la première interface de crabotage **64** et la bague de synchronisation **680**. Dans l'hypothèse où la roue **610** portant la première cannelure **61** engagée avec la cannelure intermédiaire **64** du baladeur **63** est entraînée en rotation par l'arbre intermédiaire **5**, alors que la première roue dentée de sortie **43** n'est pas en mouvement, la friction générée entre la bague de synchronisation **680** et la roue dentée de sortie **43**, directement ou par l'intermédiaire des bagues de friction **681**, met en mouvement la roue dentée de sortie, alors que le baladeur **63** poursuit sa course vers la position d'accouplement. Lorsque la cannelure intermédiaire **64** vient au contact de la deuxième cannelure **62**, la différence de vitesse entre la roue dentée **43** portant la deuxième cannelure **62** et la cannelure intermédiaire **64** du baladeur **63** est faible, de sorte que l'engagement entre la cannelure intermédiaire **64** et la deuxième cannelure **62** peut avoir lieu sans chocs et sans bruit.

La première roue dentée de sortie **43** comporte un voile **430** et un tambour périphérique **431** sur lequel sont formées les dents engrenant avec la première roue dentée d'entrée **42**. Pour augmenter la compacité axiale du système d'accouplement **6**, le tambour périphérique **431** est positionné au moins partiellement en porte-à-faux par rapport au voile **430**, de manière à constituer un logement **432** dans lequel certains éléments constitutifs du système d'accouplement **6** peuvent être entièrement ou partiellement logés au moins dans la position d'accouplement. C'est ainsi que l'organe de rappel élastique **66**, la liaison cinématique **67** et une partie du poussoir **63**, de même que le synchroniseur **68** et la bague **620** portant la deuxième cannelure **62** sont positionnés dans le logement **432** dans toutes les positions d'utilisation. Le piston **651** pénètre quant à lui dans le logement **432** dans la position d'accouplement.

On notera également qu'un logement **657** est constitué dans le support **650** pour loger un roulement **501** de guidage de l'arbre de transmission **5**, ce qui contribue également à la compacité axiale du système.

Lorsque le premier rapport de vitesses est engagé, le premier embrayage **1**, normalement ouvert, est maintenu fermé par l'application d'une commande de fermeture, alors que le deuxième embrayage, normalement ouvert, est maintenu ouvert et que le système d'accouplement **6**, normalement ouvert, est maintenu fermé par l'application d'une pression dans la chambre **652**. L'arbre de transmission **5** est entraîné par l'intermédiaire du premier arbre d'entrée **41**, de la première roue dentée d'entrée **42** et de la première roue dentée de sortie **43** accouplée à la roue **610**. Mais la deuxième roue dentée de sortie **53** entraîne également inutilement la deuxième roue dentée d'entrée **52** et le deuxième arbre d'entrée **51**. Cet état est donc consommateur d'énergie et n'est destiné qu'à des phases de démarrage ou de circulation à basse vitesse.

Le passage du premier rapport de vitesse au deuxième rapport de vitesse est obtenu en cessant d'alimenter en énergie la commande de fermeture du premier embrayage **1**, appliquant une commande de fermeture au deuxième embrayage **2** et en cessant d'alimenter en énergie la commande d'alimentation en pression de la chambre **652**. Le premier embrayage **1** et le système d'accouplement **6** retournent alors d'eux-mêmes dans leur position stable, à savoir la position ouverte, et le deuxième embrayage passe dans sa position fermée.

Le système de transmission de couple est alors peu consommateur d'énergie, puisque la première roue dentée de sortie **43**, montée folle sur l'arbre de transmission **5**, n'est pas entraînée par celui-ci et n'entraîne pas inutilement le premier arbre d'entrée **41**.

Selon une variante, le deuxième embrayage est normalement fermé et le premier embrayage est normalement ouvert. Le système de transmission de couple est alors encore mieux optimisé dans le deuxième rapport, puisqu' aucune des commandes n'est alimentée en énergie dans ce mode de fonctionnement le plus usuel.

En pratique, on prévoit un interverrouillage hydraulique ou par l'intermédiaire d'une commande électronique, entre le premier embrayage **1** et le système d'accouplement **6**, pour coordonner les ouvertures et fermetures des deux composants.

Suivant un autre mode de réalisation, on peut prévoir d'équiper la deuxième roue dentée de sortie **53** du deuxième mécanisme de transmission **12** d'un système d'accouplement similaire au système d'accouplement **6**.

En variante, certains au moins des trains d'engrenage peuvent être remplacés par des transmissions à courroie. Pour une démultiplication plus importante, certains au moins des trains d'engrenages peuvent inclure une roue intermédiaire entre roue dentée d'entrée et roue dentée de sortie.

Les interfaces de crabotage **61**, **62**, **64** ont été décrites par commodité comme des cannelures, mais peuvent comporter chacune une ou plusieurs dents et/ou une ou plusieurs gorges ou cannelures longitudinales, parallèles à l'axe de révolution 100, pour permettre un coulissement de baladeur.

Le poussoir **670** peut être d'une pièce avec le piston **651**.

Le patin annulaire **651** peut être d'une pièce ou constitué de plusieurs anneaux empilés axialement ou superposés radialement en couches coaxiales. Il peut également être constitué de plusieurs secteurs angulaires, afin de faciliter le montage dans les gorges **671** et **673**.

On peut également envisager que les gorges **671** et/ou **673** soient formées dans le patin, et coopèrent avec des nervures radiales correspondantes du poussoir **670** et/ou du baladeur **63**.

Selon un autre mode de réalisation, le piston de l'actionneur est entraîné par un mécanisme centrifuge. Ainsi, lorsqu'un seuil de vitesse prédéterminé est atteint, le système d'accouplement **6** est permuté pour interrompre l'entraînement.

Selon un autre mode de réalisation, le premier embrayage **1** peut être omis, le système d'accouplement **6** constituant alors le seul élément d'accouplement entre le premier arbre moteur **41** et l'arbre de transmission **5**.

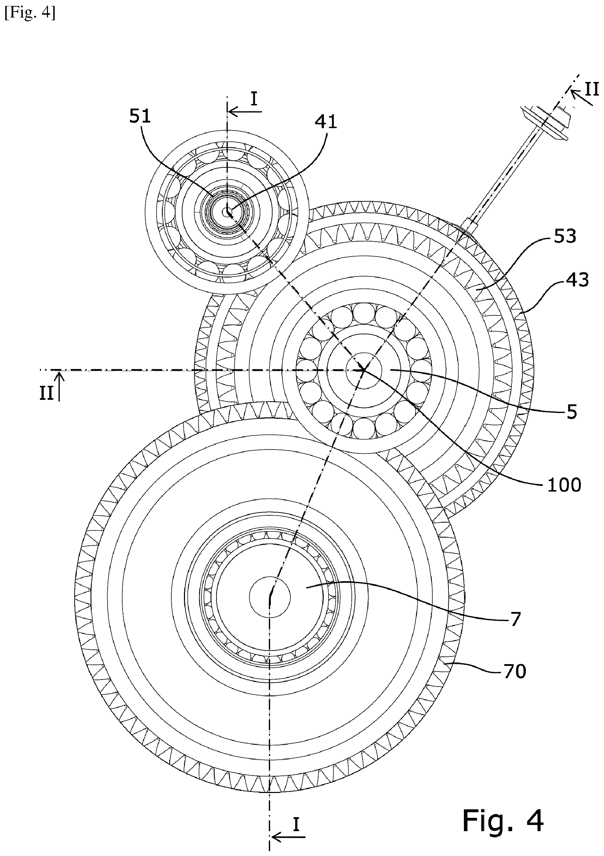

Le système d'accouplement selon l'invention peut s'intégrer à d'autres dispositifs de transmission de couple, tels qu'illustrés par exemple sur les figures **2** et **4** de la demande FR1901916.

## Revendications

1. Dispositif de transmission de couple (10) comportant :
- un arbre de transmission (5) apte à tourner autour d'un axe de révolution (100),
- une roue de transmission folle (43) apte à tourner par rapport à l'arbre de transmission (5) autour de l'axe de révolution (100), la roue de transmission folle (43) comportant un voile de roue (430) et un tambour (431) faisant saillie axialement depuis une périphérie du voile de roue (430) ;
- une première interface de crabotage (61) et une deuxième interface de crabotage (62), la première interface de crabotage (61) étant solidaire de l'arbre de transmission (5), la deuxième interface de crabotage (62) étant solidaire de la roue de transmission folle (43) ;
- un baladeur (63) comportant une interface de crabotage intermédiaire (64) engagée avec l'une des première et deuxième interfaces de crabotage (61, 62), le baladeur (63) étant apte à passer par translation parallèle à l'axe de révolution d'une position de retrait dans laquelle l'interface de crabotage intermédiaire (64) n'est pas engagée avec l'autre des première et deuxième interfaces de crabotage (61, 62) à une position d'accouplement dans laquelle l'interface de crabotage (64) intermédiaire est engagée avec l'autre des première et deuxième interfaces de crabotage (61, 62) et réalise un accouplement en rotation entre la première interface de crabotage (61) et la deuxième interface de crabotage (62) ;
- au moins un organe de rappel élastique (66) apte à se charger lorsque le baladeur (63) passe de la position de retrait à la position d'accouplement et apte, en se déchargeant, à ramener le baladeur (63) de la position d'accouplement à la position de retrait;
**caractérisé en ce que** l'organe de rappel élastique (66) est positionné dans un logement (432) de la roue de transmission folle (43) délimité par le voile de roue (430) et par le tambour (431).

2. Dispositif de transmission de couple (10) selon la revendication 1, **caractérisé en ce que** la deuxième interface de crabotage (62) est positionnée dans le logement (432) de la roue de transmission folle (43), la première interface de crabotage (61) étant de préférence logée au moins partiellement dans le logement (432) de la roue de transmission folle (43).

3. Dispositif de transmission de couple (10) selon l'une quelconque des revendications précédentes, **caractérisé en ce qu'**il comporte en outre un support fixe (650), une extrémité de l'organe de rappel élastique (66) prenant appui contre un appui (656) solidaire du support fixe (650).

4. Dispositif de transmission de couple (10) selon la revendication 3, **caractérisé en ce qu'**il comporte en outre un palier de guidage (501) monté sur l'arbre de transmission (5) et dans un logement (656) du support fixe (650).

5. Dispositif de transmission de couple (10) selon l'une quelconque des revendications 3 à 4, **caractérisé en ce qu'**il comporte en outre :
- un actionneur (65) comportant un organe mobile (651), l'organe mobile (651) étant mobile en translation par rapport au support fixe (650) parallèlement à l'axe de révolution (100) entre une position de repos et une position activée ; et
- une liaison cinématique rotative (67) entre l'organe mobile (651) et le baladeur (63), présentant un degré de liberté de rotation autour de l'axe de révolution (100), l'organe mobile (651) étant apte, par l'intermédiaire de la liaison cinématique (67), à entraîner le baladeur (63) de la position de retrait à la position d'accouplement et à charger l'organe de rappel élastique (66) en passant de la position de repos à la position activée, l'organe de rappel élastique (66) étant apte, en se déchargeant, par l'intermédiaire de la liaison cinématique (67), à ramener l'organe mobile (651) de la position activée à la position de repos et le baladeur (63) de la position d'accouplement à la position de retrait.

6. Dispositif de transmission de couple (10) selon la revendication 5, caractérisé en ce l'organe mobile (651) comprend un piston annulaire (651) apte à coulisser axialement dans une chambre annulaire (652) à volume variable du support fixe (650), reliée à un branchement d'alimentation hydraulique (653).

7. Dispositif de transmission de couple (10) selon l'une quelconque des revendications 5 à 6, **caractérisé en ce que** l'organe mobile (651) dans la position activée est au moins partiellement engagé dans le logement (432) de la roue de transmission folle (43).

8. Dispositif de transmission de couple (10) selon l'une quelconque des revendications 5 à 7, **caractérisé en ce que** la liaison cinématique rotative (67) comporte un poussoir (670) intermédiaire entre l'organe mobile (651) et l'organe de rappel élastique (66), le poussoir (670) étant fixe en rotation autour de l'axe de révolution (100), en appui contre l'organe mobile (651) et contre l'organe de rappel élastique (66), et lié au baladeur (63) par un guidage en rotation autour de l'axe de révolution (100), le guidage en rotation étant de préférence logé dans le logement (432) de la roue de transmission folle (43).

9. Dispositif de transmission de couple (10) selon la revendication 8, **caractérisé en ce que** le guidage en rotation comporte au moins un patin annulaire (672), le patin annulaire (672) étant positionné au moins partiellement entre deux parois opposées du baladeur (63) et au moins partiellement entre deux parois opposées du poussoir (670).

10. Dispositif de transmission de couple (10) selon la revendication 9, **caractérisé en ce que** le patin (672) est logé dans le logement (432) de la roue de transmission folle (43).

11. Dispositif de transmission de couple (10) selon l'une quelconque des revendications précédentes, **caractérisé en ce qu'**il comporte, interposé axialement entre la première interface de crabotage (61) et la deuxième interface de crabotage (62), un synchroniseur (68) comportant au moins une bague de synchronisation (680), le baladeur (63) dans la position de retrait n'entraînant pas la bague de synchronisation (680), le baladeur (63) étant apte, en passant lors d'une translation axiale de la position de retrait à la position d'accouplement, à passer par une position intermédiaire de synchronisation dans laquelle l'interface de crabotage intermédiaire (64) est engagée dans une interface de crabotage de synchronisation (682) de la bague de synchronisation (680) et réalise un accouplement en rotation entre la première interface de crabotage (61) et la bague de synchronisation (680), la bague de synchronisation (680) étant apte à tourner par rapport à la deuxième interface de crabotage (62) autour de l'axe de révolution (100) en engendrant par friction un couple d'entraînement de la deuxième interface de crabotage (62).

12. Dispositif de transmission de couple (10) selon la revendication 11, **caractérisé en ce que** le synchroniseur (68) est logé dans le logement (432) de la roue de transmission folle (43).

13. Dispositif selon l'une quelconque des revendications précédentes, **caractérisé en ce que** le baladeur est au moins partiellement logé dans le logement (432) de la roue de transmission folle (43).

## Patentansprüche

1. Drehmomentübertragungsvorrichtung (10) aufweisend:
- eine Antriebswelle (5), die geeignet ist, sich um eine Umdrehungsachse (100) zu drehen,
- ein freilaufendes Getrieberad (43), das geeignet ist, sich bezogen auf die Antriebswelle (5) um die Umdrehungsachse (100) zu drehen, wobei das freilaufende Getrieberad (43) eine Radscheibe (430) und eine Trommel (431), die von einer Peripherie der Radscheibe (430) axial hervorsteht, aufweist;
- eine erste Klauenkupplungsschnittstelle (61) und eine zweite Klauenkupplungsschnittstelle (62), wobei die erste Klauenkupplungsschnittstelle (61) mit der Antriebswelle (5) fest verbunden ist, wobei die zweite Klauenkupplungsschnittstelle (62) mit dem freilaufenden Getrieberad (43) fest verbunden ist;
- ein Schieberad (63), das eine zwischenliegende Klauenkupplungsschnittstelle (64) aufweist, die mit einer der ersten und zweiten Klauenkupplungsschnittstelle (61, 62) in Eingriff steht, wobei das Schieberad (63) geeignet ist, durch Translation parallel zur Umdrehungsachse aus einer Rückzugsposition, in welcher die zwischenliegende Klauenkupplungsschnittstelle (64) nicht mit der anderen der ersten und zweiten Klauenkupplungsschnittstelle (61, 62) in Eingriff steht, in eine Kupplungsposition zu wechseln, in welcher die zwischenliegende Klauenkupplungsschnittstelle (64) mit der anderen der ersten und zweiten Klauenkupplungsschnittstelle (61, 62) in Eingriff steht und eine Drehkupplung zwischen der ersten Klauenkupplungsschnittstelle (61) und der zweiten Klauenkupplungsschnittstelle (62) herstellt;
- wenigstens ein elastisches Rückstellorgan (66), das geeignet ist, gespannt zu werden, wenn das Schieberad (63) aus der Rückzugsposition in die Kupplungsposition wechselt, und geeignet ist, das Schieberad (63) aus der Kupplungsposition in die Rückzugsposition zurückzubringen, indem es sich entspannt;
**dadurch gekennzeichnet, dass** das elastische Rückstellorgan (66) in einer Aufnahme (432) des freilaufenden Getrieberads (43) positioniert ist, die von der Radscheibe (430) und der Trommel (431) begrenzt ist.

2. Drehmomentübertragungsvorrichtung (10) nach Anspruch 1, **dadurch gekennzeichnet, dass** die zweite Klauenkupplungsschnittstelle (62) in der Aufnahme (432) des freilaufenden Getrieberads (43) positioniert ist, wobei die erste Klauenkupplungsschnittstelle (61) vorzugsweise wenigstens teilweise in der Aufnahme (432) des freilaufenden Getrieberads (43) aufgenommen ist.

3. Drehmomentübertragungsvorrichtung (10) nach einem der vorhergehenden Ansprüche, **dadurch gekennzeichnet, dass** sie ferner einen festen Träger (650) aufweist, wobei ein Ende des elastischen Rückstellorgans (66) an einer Auflage (656) anliegt, die mit dem festen Träger (650) fest verbunden ist.

4. Drehmomentübertragungsvorrichtung (10) nach Anspruch 3, **dadurch gekennzeichnet, dass** sie ferner ein Führungslager (501) aufweist, das an der Antriebswelle (5) und in einer Aufnahme (656) des festen Trägers (650) angebracht ist.

5. Drehmomentübertragungsvorrichtung (10) nach einem der Ansprüche 3 bis 4, **dadurch gekennzeichnet, dass** sie ferner Folgendes aufweist:
- einen Betätiger (65), der ein bewegliches Organ (651) aufweist, wobei das bewegliche Organ (651) bezogen auf den festen Träger (650) parallel zur Umdrehungsachse (100) zwischen einer Ruheposition und einer aktivierten Position translatorisch beweglich ist; und
- eine kinematische Drehverbindung (67) zwischen dem beweglichen Organ (651) und dem Schieberad (63), die einen Drehfreiheitsgrad um die Umdrehungsachse (100) aufweist, wobei das bewegliche Organ (651) geeignet ist, mittels der kinematischen Verbindung (67) das Schieberad (63) aus der Rückzugsposition in die Kupplungsposition zu bringen und das elastische Rückstellorgan (66) zu spannen, indem es aus der Ruheposition in die aktivierte Position wechselt, wobei das elastische Rückstellorgan (66) geeignet ist, mittels der kinematischen Verbindung (67) das bewegliche Organ (651) aus der aktivierten Position in die Ruheposition und das Schieberad (63) aus der Kupplungsposition in die Rückzugsposition zurückzubringen, indem es sich entspannt.

6. Drehmomentübertragungsvorrichtung (10) nach Anspruch 5, **dadurch gekennzeichnet, dass** das bewegliche Organ (651) einen Ringkolben (651) umfasst, der geeignet ist, in einer ringförmigen Kammer (652) mit variablem Volumen des festen Trägers (650), die mit einem Hydraulikversorgungsanschluss (653) verbunden ist, axial zu gleiten.

7. Drehmomentübertragungsvorrichtung (10) nach einem der Ansprüche 5 bis 6, **dadurch gekennzeichnet, dass** das bewegliche Organ (651) in der aktivierten Position wenigstens teilweise mit der Aufnahme (432) des freilaufenden Getrieberads (43) in Eingriff steht.

8. Drehmomentübertragungsvorrichtung (10) nach einem der Ansprüche 5 bis 7, **dadurch gekennzeichnet, dass** die kinematische Drehverbindung (67) einen zwischenliegenden Schieber (670) zwischen dem beweglichen Organ (651) und dem elastischen Rückstellorgan (66) aufweist, wobei der Schieber (670) drehfest um die Umdrehungsachse (100) an dem beweglichen Organ (651) und an dem elastischen Rückstellorgan (66) anliegt und durch eine Drehführung um die Umdrehungsachse (100) mit dem Schieberad (63) verbunden ist, wobei die Drehführung vorzugsweise in der Aufnahme (432) des freilaufenden Getrieberads (43) aufgenommen ist.

9. Drehmomentübertragungsvorrichtung (10) nach Anspruch 8, **dadurch gekennzeichnet, dass** die Drehführung wenigstens einen ringförmigen Gleiter (672) aufweist, wobei der ringförmige Gleiter (672) wenigstens teilweise zwischen zwei gegenüberliegenden Wänden des Schieberads (63) und wenigstens teilweise zwischen zwei gegenüberliegenden Wänden des Schiebers (670) positioniert ist.

10. Drehmomentübertragungsvorrichtung (10) nach Anspruch 9, **dadurch gekennzeichnet, dass** der Gleiter (672) in der Aufnahme (432) des freilaufenden Getrieberads (43) aufgenommen ist.

11. Drehmomentübertragungsvorrichtung (10) nach einem der vorhergehenden Ansprüche, **dadurch gekennzeichnet, dass** sie axial zwischen die erste Klauenkupplungsschnittstelle (61) und die zweite Klauenkupplungsschnittstelle (62) gesetzt einen Synchronisierer (68) aufweist, der wenigstens einen Synchronisationsring (680) umfasst, wobei das Schieberad (63) in der Rückzugsposition den Synchronisationsring (680) nicht antreibt, wobei das Schieberad (63) geeignet ist, durch Wechsel bei einer axialen Translation aus der Rückzugsposition in die Kupplungsposition, eine Synchronisations-Zwischenposition zu durchlaufen, in welcher die zwischenliegende Klauenkupplungsschnittstelle (64) mit einer Synchronisations-Klauenkupplungsschnittstelle (682) des Synchronisationsrings (680) in Eingriff steht und eine Drehkupplung zwischen der ersten Klauenkupplungsschnittstelle (61) und dem Synchronisationsring (680) herstellt, wobei der Synchronisationsring (680) geeignet ist, sich bezogen auf die zweite Klauenkupplungsschnittstelle (62) um die Umdrehungsachse (100) zu drehen, wobei durch Reibung ein Antriebsmoment der zweiten Klauenkupplungsschnittstelle (62) herbeigeführt wird.

12. Drehmomentübertragungsvorrichtung (10) nach Anspruch 11, **dadurch gekennzeichnet, dass** der Synchronisierer (68) in der Aufnahme (432) des freilaufenden Getrieberads (43) aufgenommen ist.

13. Vorrichtung nach einem der vorhergehenden Ansprüche, **dadurch gekennzeichnet, dass** das Schieberad wenigstens teilweise in der Aufnahme (432) des freilaufenden Getrieberads (43) aufgenommen ist.

## Claims

1. Torque transmission device (10) including:
- a transmission shaft (5) capable of rotating about an axis of revolution (100),
- an idle transmission wheel (43) capable of rotating relative to the transmission shaft (5) about the axis of revolution (100), the idle transmission wheel (43) including a wheel disc (430) and a drum (431) protruding axially from a periphery of the wheel disc (430);
- a first engagement interface (61) and a second engagement interface (62), the first engagement interface (61) being rigidly connected to the transmission shaft (5), the second engagement interface (62) being rigidly connected to the idle transmission wheel (43);
- a sliding sleeve (63) including an intermediate engagement interface (64) engaged with one of the first and second engagement interfaces (61, 62), the sliding sleeve (63) being capable of moving, by translation parallel to the axis of revolution, from a retracted position in which the intermediate engagement interface (64) is not engaged with the other of the first and second engagement interfaces (61, 62) to a coupling position in which the intermediate engagement interface (64) is engaged with the other of the first and second engagement interfaces (61, 62) and produces a rotational coupling between the first engagement interface (61) and the second engagement interface (62);
- at least one elastic return member (66) capable of being loaded when the sliding sleeve (63) moves from the retracted position to the coupling position, and capable, by unloading, of returning the sliding sleeve (63) from the coupling position to the retracted position;
**characterized in that** the elastic return member (66) is positioned in a recess (432) of the idle transmission wheel (43) defined by the wheel disc (430) and the drum (431).

2. Torque transmission device (10) according to Claim 1, **characterized in that** the second engagement interface (62) is positioned in the recess (432) of the idle transmission wheel (43), the first engagement interface (61) being preferably at least partially accommodated in the recess (432) of the idle transmission wheel (43).

3. Torque transmission device (10) according to any one of the preceding claims, **characterized in that** it further includes a fixed support (650), one end of the elastic return member (66) pressing on a bearing surface (656) rigidly connected to the fixed support (650).

4. Torque transmission device (10) according to Claim 3, **characterized in that** it further includes a guide bearing (501) mounted on the transmission shaft (5) and in a recess (656) of the fixed support (650).

5. Torque transmission device (10) according to any one of Claims 3 and 4, **characterized in that** it further includes:
- an actuator (65) including a mobile member (651), the mobile member (651) being mobile in translation relative to the fixed support (650) parallel to the axis of revolution (100) between a rest position and an activated position; and
- a rotating kinematic link (67) between the mobile member (651) and the sliding sleeve (63), having a degree of freedom to rotate about the axis of revolution (100), the mobile member (651) being capable, by means of the kinematic link (67), of driving the sliding sleeve (63) from the retracted position to the coupling position and loading the elastic return member (66) by moving from the rest position to the activated position, the elastic return member (66) being capable, by unloading, by means of the kinematic link (67), of returning the mobile member (651) from the activated position to the rest position and the sliding sleeve (63) from the coupling position to the retracted position.

6. Torque transmission device (10) according to Claim 5, **characterized in that** the mobile member (651) comprises an annular piston (651) capable of sliding axially in a variable-volume annular chamber (652) of the fixed support (650), connected to a hydraulic supply line (653).

7. Torque transmission device (10) according to any one of Claims 5 and 6, **characterized in that** the mobile member (651) in the activated position is at least partially engaged in the recess (432) of the idle transmission wheel (43).

8. Torque transmission device (10) according to any one of Claims 5 to 7, **characterized in that** the rotating kinematic link (67) includes an intermediate push rod (670) between the mobile member (651) and the elastic return member (66), the push rod (670) being fixed in rotation about the axis of revolution (100), pressing against the mobile member (651) and the elastic return member (66), and connected to the sliding sleeve (63) by a rotational guide about the axis of revolution (100), the rotational guide being preferably accommodated in the recess (432) of the idle transmission wheel (43).

9. Torque transmission device (10) according to Claim 8, **characterized in that** the rotational guide includes at least one annular pad (672), the annular pad (672) being positioned at least partially between two opposite walls of the sliding sleeve (63) and at least partially between two opposite walls of the push rod (670).

10. Torque transmission device (10) according to Claim 9, **characterized in that** the pad (672) is accommodated in the recess (432) of the idle transmission wheel (43).

11. Torque transmission device (10) according to any one of the preceding claims, **characterized in that** it includes, interposed axially between the first engagement interface (61) and the second engagement interface (62), a synchronizer (68) including at least one synchronizing ring (680), the sliding sleeve (63) in the retracted position not driving the synchronizing ring (680), the sliding sleeve (63) being capable, when moving during an axial translation from the retracted position to the coupling position, of passing through an intermediate synchronizing position in which the intermediate engagement interface (64) is engaged in a synchronizing engagement interface (682) of the synchronizing ring (680) and produces a rotational coupling between the first engagement interface (61) and the synchronizing ring (680), the synchronizing ring (680) being capable of rotating relative to the second engagement interface (62) about the axis of revolution (100), generating, by friction, torque for driving the second engagement interface (62).

12. Torque transmission device (10) according to Claim 11, **characterized in that** the synchronizer (68) is accommodated in the recess (432) of the idle transmission wheel (43).

13. Device according to any one of the preceding claims, **characterized in that** the sliding sleeve is at least partially accommodated in the recess (432) of the idle transmission wheel (43).
